# EUROPEAN PATENT APPLICATION

(11) **EP 1 587 272 A1**
(43) Date of publication of application: **19.10.2005**
(21) Application number: 04290988.7
(22) Date of filing: 13.04.2004
(51) Int. Cl.: H04L 29/06

(54) **Method and apparatus for load distribution in a wireless data network**

(71) Applicant: ALCATEL, 75008 Paris (FR)
(72) Inventor: Chischportich, Stephen, 75013 Paris (FR); Dauchy, Philippe, 75014 Paris (FR)
(74) Representative: Richardt, Markus Albert

(57) **Abstract**

The present invention relates to a method of establishing a connection between a user equipment (126) of a first wireless telecommunication network (104) and a second network (116, 118, 120), the first and second networks being coupled by a plurality of gateways (122, 124), each of the gateways having an IP address, the method comprising:
- receiving a connection request (130) from the user equipment,
- using a domain name server (DNS, 106) of the first network to determine a set of IP addresses of gateways of the plurality of gateways through which the requested connection can be established,
- receiving network condition data being descriptive of a network condition of the first and / or second network,
- selecting one of the IP addresses from the set based on the network condition data,
- establishing the connection through the gateway identified by the selected one of the IP addresses.

## Description

### Field of the invention.

The present invention generally relates to the field of telecommunications, and more particularly without limitation, to the provision of wireless internet access for mobile subscribers.

### Background and prior art

The growth of the internet and the success of mobile wireless networks have created an increasing demand for mobile access to internet applications. It is therefore increasingly important that mobile radio networks support these applications in an efficient manner. Thus, mobile radio systems currently under development include support for packet data services. The most widely deployed standard for second-generation mobile radio networks is the global system for mobile communications (GSM). Networks based on this standard have been extended with the general packet radio service (GPRS) / universal mobile telecommunication systems (UMTS).

In recent years end-user applications such as web browsing and email are becoming increasingly popular; therefore the internet has dominated the standardization of GPRS. Internet applications are predicted to contribute the largest share of the expected traffic volume.

In brief, GPRS can be described as a service providing optimised access to the internet, while reusing to a large degree existing GSM/UMTS infrastructure. GPRS supports applications based on standard protocols for packet-mode data communication. The standards include interworking procedures with IP and X.25 networks.

GPRS requires the introduction of two additional types of network elements to handle the end-to-end packet traffic. These new network elements are called the serving GPRS support node (SGSN) and gateway GPRS support node (GGSN). For a more detailed description of GGSN and SGSN reference is made to "Performance and architecture of SGSN and GGSN of general packet radio service (GPRS)", Global Telecommunications Conference, 2001. GLOBECOM '01. IEEE, Mishra, A. , Pages: 3494 -3498 vol.6.

A number of approaches for providing wireless internet access via GPRS /UMTS networks are known from "Wireless Internet access for mobile subscribers based on the GPRS/UMTS network", Communications Magazine, IEEE, Jeong-Hyun Park , Page(s): 38 -49; "Wireless Internet access of the visited mobile ISP subscriber on GPRS/UMTS network", Consumer Electronics, IEEE Transactions, Jeong-Hyun Park, Page(s): 100 - 106.

### Summary of the invention

The present invention provides a method of establishing a connection between a user equipment of a wireless telecommunication network and a second network, such as for the provision of wireless internet access. The wireless telecommunication network is coupled to the second network by means of a plurality of gateways. Each of the gateways has an IP address. When a connection request is received from the user equipment of the wireless telecommunication network, a domain name server of the wireless telecommunication network is used to determine a set of IP addresses of gateways of the plurality of gateways through which the requested connection can be established. Network condition data is used for selecting one of the IP addresses from the set. Next, the requested connection is established through the gateway as identified by the selected one of the IP addresses.

It is to be noted that the present invention is particularly advantageous as the usage of network condition data for selection of the gateway has the advantage of making more efficient usage of the available network resources. For example, the network condition data is descriptive of the current load situations of the gateways and/or the network. Preferably the gateway having the lowest load condition is selected from the set for the purpose of load balancing.

For example, the wireless telecommunication network is a GPRS / UMTS network. In this instance the gateways are implemented by means of GGSNs. The connection request from the user equipment is received by the SGSN. The SGSN receives the selected IP address of the gateway from the domain name server (DNS) of the GPRS / UMTS network. On this basis the SGSN establishes the required connection through the selected GGSN.

### Brief description of the drawings

In the following preferred embodiments of the invention will be described by way of example only by making reference to the drawings in which:
- Figure 1: is a block diagram of an embodiment of a GPRS/UMTS-type network of the invention,
- Figure 2: is a flowchart illustrating the steps involved in selecting a GGSN gateway in the network of figure 1.

### Detailed description

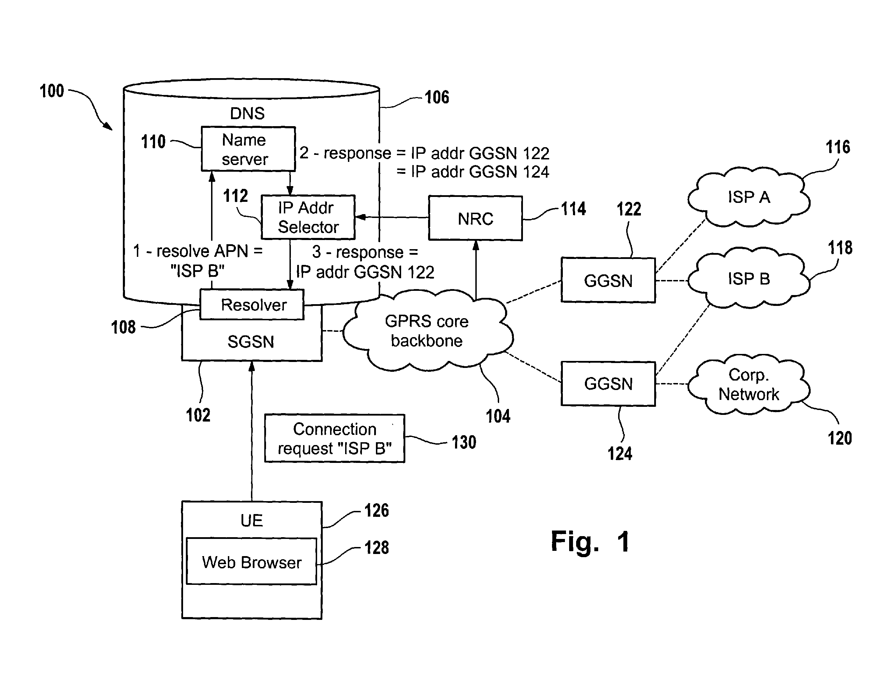

Figure 1 shows GPRS/UMTS-type telecommunications network 100. Network 100 has SGSN102 that is coupled to GPRS core backbone 104. Network 100 has private domain name server (DNS) 106 that is also coupled to SGSN 102. RFC 1035 which is incorporated herein in its entirety and which is available for download from http://www.ietf.org/rfc/rfc1035.txt , shows common architectures that can be used for implementation of DNS 106. According to these architectures resolver 108 can be implemented as part of DNS 106 or elsewhere, e.g. as part of SGSN 102. DNS 106 has name server 110 and IP address selector 112.

Network resource controller (NRC) 114 is coupled to GPRS core backbone 104. NRC 114 collects network condition data from GPRS core backbone 104, such as data regarding the current load conditions of the GGSNs coupled to GPRS core backbone 104. IP address selector 112 is coupled to NRC 114 for access to the network condition data collected by NRC 114.

ISP A network 116, ISP B network 118, and corporate network 120 are coupled to GPRS core backbone 104 by means of GGSN 122 and GGSN 124. In particular network 116 is coupled to GGSN 122, network 120 is coupled to GGSN 124 and network 118 is coupled to both GGSN 122 and GGSN 124.

The IP addresses of GGSN 122 and 124 are entered into name server 110 of DNS106.

User equipment (UE) 126 has web browser 128. The user of UE 126 can enter an access point name (APN) or a uniform resource locater (URL) into web browser 128 for sending a connection request to SGSN 102. For example, the user enters APN = "ISP B" in order to request the establishment of a connection with network 118. In response connection request 130 is generated by user equipment 126 and transmitted via the air interface of UE 126 to SGSN 102.

SGSN 102 forwards connection request 130 to resolver 108. Resolver 108 sends a request to name server 110 for address resolution of APN = "ISP B" (step 1). As network 118 is coupled both to GGSN 122 and GGSN 124 name server 110 returns a set of IP addresses containing both the IP address of GGSN 122 and GGSN 124 (step 2). This set of IP addresses is provided from name server 110 to IP address selector 112 that has the task of selecting one of the IP addresses contained in the set. The selection of one of the IP addresses is performed by IP address selector 112 on the basis of network condition data provided by NRC 114. For example, the selection criterion applied by IP address selector 112 is the current load situation experienced by the GGSNs identified by the set.

In the example considered here GGSN 124 is operating at its load capacity limit while GGSN122 has a large unused capacity. This load situation of the GGSNs is reflected by the network condition data provided from the NRC 114 to IP address selector 112. IP address selector 112 selects GGSN 122 by applying its selection criterion as GGSN 122 experiences a lower load condition as GGSN124. As a consequence IP address selector 112 provides the IP address of GGSN 122 to resolver 108 (step 3). Resolver 108 returns the IP address of GGSN 122 to SGSN102. SGSN 102 forwards connection request 130 to the GGSN as identified by the returned IP address, i.e. GGSN 122, such that the IP connection with the requested target network 118 is formed.

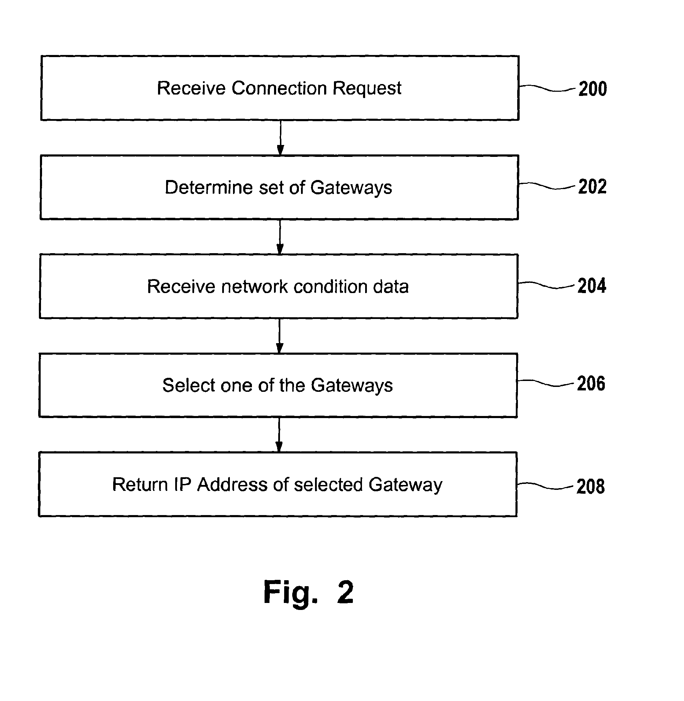

Figure 2 shows a corresponding flowchart. In step 200 a connection request for wireless internet access is received by the SGSN from the user equipment. In response a set of GGSN gateways that can be used for establishing the requested connection is determined (step 202). Network condition data that describes a network condition, and in particular a condition of the gateways, is received in step 204. One of the gateways contained in the set of gateways determined in step 202 is selected in step 206 on the basis of the network condition data by applying a predefined selection criteria. For example the predefined selection criteria relates to the current load situation, availability, security, cost or other criteria of the alternative GGSNs of the set. In step 208 the IP address of the selected gateway of the set is returned to the SGSN which forwards the connection request to the identified gateway for formation of the requested connection.

### List of Reference Numerals

- 100: network
- 102: SGSN
- 104: GPRS core backbone
- 106: DNS
- 108: Resolver
- 110: Name Server
- 112: IP Address Selector
- 114: NRC
- 116: Network
- 118: Network
- 120: Network
- 122: GGSN
- 124: GGSN
- 126: UE
- 128: Web Browser
- 130: Communication Request

## Claims

1. A method of establishing a connection between a user equipment (126) of a first wireless telecommunication network (104) and a second network (116, 118, 120), the first and second networks being coupled by a plurality of gateways (122, 124), each of the gateways having an IP address, the method comprising:
- receiving a connection request (130) from the user equipment,
- using a domain name server (DNS, 106) of the first network to determine a set of IP addresses of gateways of the plurality of gateways through which the requested connection can be established,
- receiving network condition data being descriptive of a network condition of the first and / or second network,
- selecting one of the IP addresses from the set based on the network condition data,
- establishing the connection through the gateway identified by the selected one of the IP addresses.

2. The method of claim 1, wherein the first network is a UMTS-type network.

3. The method of claim 1, wherein the domain name server is a private domain name server of the first network.

4. The methods of claim 1, the network condition data being descriptive of the current load situation of the gateways and/or the network.

5. The method of claim 4, wherein the selection of one of the IP addresses from the set based on the network condition data is performed in order to select one of the gateways from the set that has the lowest current load situation of the set of gateways.

6. A network component for a first wireless telecommunication network (104), the first network being coupled to at least a second network (116, 118, 120) by a plurality of gateways (122, 124), each of the gateways having an IP address, the network component comprising:
- means (102) for receiving a connection request (130) from a user equipment (126) of the first network,
- means (110) for determining a set of IP addresses of gateways of the plurality of gateways through which the requested connection can be established,
- means (112) for receiving network condition data being descriptive of a network condition of the first and / or second network,
- means (112) for selecting one of the IP addresses from the set based on the network condition data by applying a predefined criterion.

7. The network component of claim 6, the means for receiving the network condition data being adapted to be coupled to a network resource controller (114).

8. A wireless telecommunication network comprising:
- a plurality of gateways (122, 214) for coupling to at least a second network (116, 118, 120), each of the gateways having an IP address,
- a domain name server (106) for determination of a set of IP addresses of gateways of the plurality of gateways through which a requested connection can be established,
- means (112) for selecting one of the IP addresses from the set based on network condition data being descriptive of the network condition of the first and / or second network,
- means (102) for establishing the requested connection through the gateway identified by the selected one of the IP addresses.

9. The telecommunication network of claim 8, further comprising a network resource controller (114) for providing the network condition data.

10. A computer program product for execution by a network component of a first wireless telecommunication network , the first network being coupled to at least a second network (116, 118) by a plurality of gateways (122, 124), each of the gateways having an IP address, the computer program product comprising instructions for:
- receiving a connection request (130) from the user equipment,
- using a domain name server (DNS, 106) of the first network to determine a set of IP addresses of gateways of the plurality of gateways through which the requested connection can be established,
- receiving network condition data being descriptive of a network condition of the first and / or second network,
- selecting one of the IP addresses from the set based on the network condition data,
- establishing the connection through the gateway identified by the selected one of the IP addresses.
